# EUROPÄISCHE PATENTSCHRIFT

(11) **EP 0 869 638 B1**
(45) Veröffentlichungstag und Bekanntmachung des Hinweises auf die Patenterteilung: **15.11.2006**
(21) Anmeldenummer: 98103785.6
(22) Anmeldetag: 04.03.1998
(51) Int. Cl.: H04L 12/12, G06F 1/24

(54) **Vorrichtung zum fernbedienten Zurücksetzen von Rechenanlagen, insbesondere Mikrocomputern**
Apparatus for remote resetting of computer installations in particular of microcomputers
Dispositif de remise à zéro à distance d'ordinateurs, en particulier de microcalculateurs

(30) Priorität: 25.03.1997 DE 19712372
(43) Veröffentlichungstag der Anmeldung: 07.10.1998
(73) Patentinhaber: Deutsche Telekom AG, 53113 Bonn (DE)
(72) Erfinder: Rosenthal, Guido, 52393 Hürtgenwald (DE)
(74) Vertreter: Mierswa, Klaus

(56) Entgegenhaltungen:
- GB-A- 2 258 118
- US-A- 4 686 526
- US-A- 5 086 505
- US-A- 5 581 549

## Beschreibung

Die Erfindung betrifft eine Vorrichtung zum fernbedienten Zurücksetzen von Rechenanlagen, insbesondere Mikrocomputern.

Derartige Rechenanlagen werden z.B. im Telekommunikationsbereich bei der Übermittlung und/oder Verarbeitung von Daten betrieben, wobei deren Anwendung von Zeit zu Zeit ein ein- oder mehrmaliges Zurücksetzen der Rechenanlage in einen definierten Anfangszustand notwendig macht.

Mikrocomputer bekannter Art, die beispielsweise zur Verarbeitung und/oder Übertragung von Daten verwendet werden, müssen von Zeit zu Zeit in einen definierten Anfangszustand zurückgesetzt werden. Gründe, die ein Zurücksetzen notwendig machen, können Systemabstürze oder Änderungen bzw. Umkonfigurationen der Mikrocomputer sein. Systemabstürze können durch Fehler der im Mikrocomputer verwendeten Software oder durch Fehler oder Verschleiß von Hardwarekomponenten, z.B. flüchtigen oder nichtflüchtigen Speichereinheiten, oder externer Komponenten, z.B. Telekommunikationskarten etc., verursacht werden und sind im allgemeinen nicht vorhersehbar. Wartungsarbeiten und Änderungen bzw. Umkonfiguration von Mikrocomputern erfolgen dagegen meist planmäßig und erfordern oft die Anwesenheit von Betriebspersonal vor Ort. Bei diesen planmäßigen Eingriffen in den Betrieb der Mikrocomputer kann das Betriebspersonal den Mikrocomputer nach erfolgter Umkonfiguration durch Betätigen einer am Mikrocomputer vorhandenen Reseteinrichtung in einen definierten Anfangszustand zurücksetzen. In den Fällen planmäßigen Eingreifens, bei denen kein Betriebspersonal anwesend ist, die jedoch ein Hardwarereset nötig machen, z.B. bei fernbedienter Umkonfiguration eines Mikrocomputers, und den nicht vorhersehbaren Fällen von Systemabstürzen, bei denen im allgemeinen kein Betriebspersonal anwesend ist, gestaltet sich das Zurücksetzen der betroffenen Mikrocomputer schwierig. Das Betriebspersonal muß nach dem bisherigen Stand der Technik informiert werden und die betroffenen Einheiten manuell zurücksetzen. Das erfordert in jedem Fall einen erheblichen Zeit- und Kostenaufwand, besonders, wenn die Betriebsstätten der einzelnen Mikrocomputer weit voneinander entfernt liegen, wie das z.B. bei großen regional- oder landesweit installierten Rechnernetzwerken der Fall ist.

Während der Stillstandszeit der betreffenden Mikrocomputer ist das Rechnernetzwerk, Teile des Netzwerks oder zumindest der Mikrocomputer selbst nicht einsatzfähig und die Verfügbarkeit und damit Leistungsfähigkeit und Effizienz des Gesamtsystems sinkt. Das manuelle Zurücksetzen birgt zudem die erhöhte Gefahr, daß unbeabsichtigt Mikrocomputer irrtümlich oder fehlerhaft zurückgesetzt werden, was ebenfalls zu einer Verringerung der Effizienz des Gesamtsystems führt.

US 4,686,526 beschreibt eine Schaltung, welche ein Zurücksetzen eines digitalen Systems von einem entfernen Standort aus ermöglicht. Weiterhin ist es aus GB-A-2 258 118 bekannt, Schaltungen mit Mikroprozessoren an das Telefonnetz anzuschließen und Steuersignale über das Telefonnetz an die Schaltung zu übertragen.

Der Erfindung liegt deshalb die Aufgabe zugrunde, eine Möglichkeit zum Zurücksetzen von einer oder mehreren räumlich entfernten Rechenanlagen anzugeben, welche die Kosten sowie den Zeitaufwand für das Zurücksetzen senkt und so die Verfügbarkeit und die Wirtschaftlichkeit des Gesamtsystems erhöht.

Die Aufgabe wird gelöst mit einer Vorrichtung zum fernbedienten Zurücksetzen von Rechenanlagen, insbesondere Mikrocomputern, dadurch gekennzeichnet, dass dieselbe aus einer Steuerkarte und wenigstens einem Resetelement, welches jeweils einem Mikrocomputer zugeordnet ist, besteht, wobei
a) die Steuerkarte an das Telefonnetz anschließbar ist, mit einem Eingangselement über das Telefonnetz übermittelte Steuersignale empfängt und eine Zentraleinheit die Steuersignale als binären Steuercode einer Expandereinheit übermittelt, welche die dem Steuercode entsprechenden Resetelemente ansteuert und schaltet, wodurch die zugeordneten Mikrocomputer zurückgesetzt werden,
b) ein Schaltungsresetmodul die Steuerkarte und damit die Resetelemente in einen definierten Anfangszustand zurückzusetzen imstande ist, und
c) das Schaltungsresetmodul wenigstens drei Betriebszustände einnehmen kann, wobei ein dem Schaltungsresetmodul ugeordnetes Schaltelement in einer Stellung A das Zurücksetzen der Steuerkarte immer verhindert, in einer zweiten Stellung B das Zurücksetzen immer erlaubt und in einer dritten Stellung C die Zentraleinheit programmgesteuert ein Zurücksetzen der elektronischen Schaltung zuzulassen oder zu verhindern imstande ist.

Vorteilhafte Weiterbildungen der Erfindung sind in den Unteransprüchen angegeben.

Die Steuerkarte wird über ein Eingangselement an das Telefonnetz angeschlossen, wobei eine Netzzugangskontrolle mit Abfrage eines Zugangscodes vorgesehen ist. Damit kann das Zurücksetzen von jedem beliebigen weiteren Telefonanschluß fernbedient und zeitsparend durchgeführt werden, ohne daß ein Einsatz am Standort der Rechenanlage notwendig ist. Zwischen Telefonleitung und Eingangselement kann zur Zugangskontrolle und zur Erfüllung der Telekommunikationsnormen z.B. ein Netzzugangsgerät (Network Access Device NAD) geschaltet sein. Die Funktion des NAD kann jedoch auch in der Steuerkarte selbst integriert sein, z.B. im Eingangselement oder in der Zentraleinheit. Ein Netzzugangsgerät (NAD) ermöglicht den kontrollierten, gesicherten Fernzugriff über das Telefonnetz auf an das NAD angeschlossene Geräte, z.B. Mikrocomputer, durch eine Paßwort- bzw. Codenummerabfrage.

Nach korrekter Codeeingabe gibt die Eingangseinheit die Steuerkarte frei, so daß die angeschlossenen Mikrocomputer durch Schalten der Resetelemente der erfindungsgemäßen Vorrichtung zurückgesetzt werden können.

Die Steuersignale zum Auswählen und Schalten der Resetelemente werden über das Telefonnetz übertragen. Diese Signale sind vorzugsweise mehrfrequenzcodierte Signale. Sie können vom Anwender in bekannter Weise durch direkten Telefonanruf mit einem MFV-fähigen Telefon oder per zentraler Computersteuerung mit einem Modem, welches dann bei der Steuerkarte anruft, erzeugt werden. Computersteuerung hat insbesondere den Vorteil, daß Rufnummern der einzelnen Standorte, die Codenummern der dortigen Steuerkarten und die Kennummern der zugeordneten, gegebenenfalls zurückzusetzenden Rechenanlagen gespeichert sind, programmgesteuert zu einem Modembefehl mit Anwahl und Freischaltung der Steuerkarte und den entsprechenden Steuersignalen für die Ansteuerung der Resetelemente zusammengefaßt werden, und somit das ferngesteuerte Zurücksetzen von Rechenanlagen bequem und schnell durchgefürt werden kann.

Signale aus dem Telefonnetz werden an einen Mehrfrequenzverfahren-Decoder (MFV-Decoder) bekannter Bauart weitergeleitet. Der MFV-Decoder wandelt in bekannter Weise Mehrfrequenzsignale (MFV-Signale), die über das Telefonnetz gesendet werden, in einen dem Signal entsprechenden Binärcode um, der über zugeordnete Eingangsleitungen in eine Zentraleinheit übermittelt wird. Der MFV-Decoder dient zusätzlich als Filter, der Fremdsignale, wie z.B. Sprache oder FAX-Signale, zuverlässig unterdrückt. Dem MFV-Decoder kann dazu in vorteilhafter Weise eine Steuerleitung zugeordnet sein, an die nur dann ein Signal zum Freischalten/Aktivieren der Zentraleinheit angelegt wird, wenn ein gültiges MFV-Signal vom Decoder erkannt wurde.

In einer weiteren Ausgestaltung der Erfindung wird die Vorrichtung mit Datenwörtern gesteuert. Dazu weist die erfindungsgemäße Vorrichtung eine RS232-Schnittstelle mit entsprechenden in der Zentraleinheit installierten Steueralgorithmen auf und ist über ein Modem als Vorschaltgerät mit dem Telefonnetz verbunden.

Das Eingangselement besitzt Mittel zum Schutz der elektronischen Schaltung vor Überspannung, die eine galvanische Trennung der Schaltung vom Telefonnetz gewährleisten.In einer weiteren vorteilhaften Ausgestaltung der Erfindung weist die Steuerkarte ein Schaltungsresetmodul auf, das mit dem Eingangselement und der Zentraleinheit verbunden ist. Das Schaltungsresetmodul hat die Aufgabe, die erfindungsgemäße Vorrichtung in einen definierten Anfangszustand zu setzten. Dies kann z.B. nötig werden, wenn nach Stromschwankungen oder Stromausfällen die Versorgungsspannung der elektronischen Schaltung nicht korrekt aufgebaut wurde, oder wenn ein Anrufer eine an die Schaltung übermittelte Eingabe zurücknehmen will.

Das Schaltungsresetmodul besitzt dazu vorzugsweise einen Logikbaustein, der mit den Eingangsleitungen und der Steuerleitung des MFV-Decoders verbunden ist, wobei die Eingangsleitungen des MFV-Decoders beispielsweise von den entsprechenden Eingangsleitungen der Zentraleinheit abzweigen, und ein Schaltelement, das mehrere definierte Stellungen, z.B. drei Stellungen, einnehmen kann. Liegt an den Eingangsleitungen, die mit dem Logikbaustein verbunden sind, der Binärcode für das Zurücksetzen der erfindungsgemäßen Vorrichtung und an der Steuerleitung das Signal für ein gültiges MFV-Signal vom MFV-Decoder an, so bestimmt die Stellung des Schaltelements, ob die Vorrichtung tatsächlich zurückgesetzt wird. Eine Stellung A des Schaltelements ermöglicht das Zurücksetzten der Vorrichtung immer, eine zweite Stellung B verhindert das Zurücksetzten immer und eine dritte Stellung C ermöglicht es der Zentraleinheit, programmgesteuert zu entscheiden, ob das Zurücksetzen der gesamten Vorrichtung ermöglicht oder verhindert wird.

Vorteilhaft kann der Logikbaustein als eine Kombination von mehreren NICHT-UND-Gattern und Transistoren ausgeführt sein. Eine so gebildete Gatterlogik ist, ebenso wie der MFV-Decoder, unempfindlich gegen Spannungsschwankungen und arbeitet fehlerfrei, solange eine Mindestspannung nicht unterschritten wird. Ein Zurücksetzen der erfindungsgemäßen Vorrichtung ist somit, abhängig von der Schaltelementstellung, auch bei ungünstigen Spannungsverhältnissen möglich. Sind sämtliche Bedingungen für das Zurücksetzten der Vorrichtung erfüllt, so sendet der Logikbaustein ein entsprechendes Signal an die Zentraleinheit, über eine mit dieser verbundenen Rücksetzleitung. Die Zentraleinheit wird dann in einen definierten Anfangszustand zurückgesetzt, so daß dann auch der Expander in seinem definierten Anfangszustand vorliegt.

Weiterhin wird die Zentraleinheit nach Herstellung der Telefonverbindung oder nach richtiger Zugangscodeeingabe vom Schaltungsresetmodul in einen definierten Anfangszustand zurückgesetzt.

Die Zentraleinheit verfügt über einen Prozessor und eine Speichereinheit mit einem zugeordnetem Programm. Die Zentraleinheit ist über die Eingangsleitungen und die Steuerleitung mit dem Eingangselement verbunden. Der Prozessor übernimmt die binär verschlüsselten Signale und steuert Ausgangsleitungen gemäß den vom Programm vorgegebenen Anweisungen an. Die Ausgangsleitungen sind mit einer Expandereinheit verbunden und können um eine Pegelleitung ergänzt sein. Die Anzahl der Ausgangsleitungen richtet sich nach dem verwendeten Prozessortyp und der Anzahl angeschlossener Mikrocomputer. Über die Ausgangsleitungen überträgt der Prozessor die binär verschlüsselte Nummer des Mikrocomputers, der fernbedient zurückgesetzt werden soll, an eine Expandereinheit.

Die Expandereinheit besitzt Ausgänge, die je nach einem vom Prozessor übertragenen Binärcode mit Spannung beaufschlagt werden können. Der Expandereinheit ist dazu vorzugsweise ein Verstärkerelement zugeordnet. Die Spannung auf der in die Expandereinheit mündenden Pegelleitung wird auf denjenigen Ausgang projiziert, dessen Nummer als Binärcode an den Ausgangsleitungen an der Expandereinheit anliegt. Das Verstärkerelement verstärkt die Spannung so, daß ein an den Ausgang angeschlossenes Resetelement einen angeschlossenen Mikrocomputer in einen definierten Anfangszustand zurücksetzen kann.

Je nach Anwendung der Vorrichtung sind verschiedene Ausgestaltungen der Resetelemente möglich: Soll ein Warmstart angeschlossener Mikrocomputer durchgeführt werden können, werden die Ausgänge der Expandereinheit bzw. der Verstärker an die Resetleitungen der entsprechenden Mikrocomputer angeschlossen. Das Resetelement wird in diesem Fall durch den Anschluß des Verstärkers an die Resetleitung gebildet. Ein Signal am Ausgang der Expandereinheit bewirkt ein Zurücksetzen des entsprechenden Mikrocomputers, ohne daß dieser von der Stromversorgung getrennt ist.

Je nach Betriebszustand des Computers kann es jedoch vorkommmen, daß der Prozessor auf den vom Signal an der Resetleitung ausgelösten Resetbefehl nicht reagiert (Komplettabsturz). Zudem gibt es Steckkarten, die durch einen Warmstart nicht richtig in den Urzustand zurückgesetzt werden. Um einen Kaltstart, d.h. einen Neustart durch kurzzeitige Trennung von der Stromversorgung, zu erzwingen, werden in die Resetelemente Starkstromrelais eingebaut und die Mikrocomputer über das Relais so an das Stromnetz angeschlossen, daß ein Signal am Resetelement eine kurzzeitige Unterbrechung der Stromversorgung während des Anliegens des Signals bewirkt, welche einen Kaltstart zur Folge hat.

Es ist weiterhin von Vorteil, die an die erfindungsgemäße Vorrichtung angeschlossenen Mikrocomputer auch ferngesteuert für beliebige Zeitspannen vom Netz nehmen zu können. Dazu werden in einer vorteilhaften Weiterbildung der Erfindung jeweils zwei Ausgangsleitungen der Expandereinheit mit einem RS-Flipflop verbunden, welches nach Verstärkung seines Ausgangssignals ein Starkstromrelais schaltet. Die Verstärkung der Ausgangssignale der Expandereinheit ist in diesem Fall überflüssig. Durch Ansteuerung der ersten Expanderleitung setzt das RS-Flipflop den Ausgang auf den "Ein"-Zustand. Über die Verstärkerstufe wird das Relais dann zum Anziehen gezwungen, wodurch der Computer vom Stromnetz getrennt wird. Ein weiteres Signal auf diese erste Expander-Ausgangsleitung bleibt ohne Effekt. Durch Ansteuerung der zweiten Expanderleitung schlägt das Flipflop in den "Aus"-Zustand um, das Relais bekommt keinen Strom mehr, wodurch der Stromkreis auf der Schaltseite wieder geschlossen und der Computer wieder eingeschaltet wird.

Die Eingabe von Anweisungen für das fernbediente Zurücksetzen eines oder mehrerer Mikrocomputer erfolgt über ein MFV-fähiges Telefon oder über einen zentralen Steuercomputer mit Modem, welche wie die erfindungsgemäße Vorrichtung an das Telefonnetz angeschlossen sind. Die Verbindung mit einem Anrufer bzw. einem anrufenden Gerät wird vom Vorschaltelement oder vom Eingangselement hergestellt.

In einer vorteilhaften Weiterbildung der Erfindung wird der Verbindungsaufbau dem Anrufer durch einen Quittungston oder eine Quittungstonfolge oder auch durch ein Quittungs-Datenwort mitgeteilt. Im Falle der Steuerung der Vorrichtung mit MFV-Signalen wird dieses Signal von der Vorrichtung über einen Tongenerator erzeugt. Bei Steuerung mit Datenwörtern werden die Quittungssignale von der Zentraleinheit gesendet.

Nach Verbindungsherstellung und gegebenenfalls Zugangscodeabfrage kann der Anrufer Anweisungen je nach Ausgestaltung der Erfindung in Form von MFV-Signalen oder Datenwörtern an die Vorrichtung schicken.

Bei Verwendung von MFV-Signalen kann durch Eingabe einer Ziffernfolge und derem Übermittlung an die Vorrichtung ein angeschlossener Mikrocomputer ausgewählt werden, der in einen definierten Zustand zurückgesetzt werden soll. Den Befehl für das Zurücksetzen erhält die Vorrichtung beispielsweise über eine Sondertaste, z.B. die "*"-Taste. Dieses Signal veranlaßt das der Zentraleinheit zugeordnete Programm zu prüfen, ob eine zulässige Ziffernfolge vom Anrufer gewählt wurde. Zulässige Ziffernfolgen können Nummern einzelner Ausgänge der elektronischen Schaltung und der zugehörigen Mikrocomputer sein, oder eine codierte Anweisung an die Zentraleinheit, sämtliche angeschlossene oder ausgewählte Mikrocomputer zurückzusetzen. Da nur ein Ausgang des Expanders gleichzeitig angesprochen werden kann, erfolgt das Zurücksetzen mehrerer ausgewählter Mikrocomputer zeitlich nacheinander, z.B. gesteuert durch eine Programmschleife. Nach erfolgreicher Plausibilitätsprüfung quittiert die elektronische Schaltung den Vorgang mit einem vom Tongenerator erzeugten Quittungston oder einer Quittungstonfolge und setzt die entsprechenden angeschlossenen Mikrocomputer über die Expandereinheit und die zugehörigen Resetelemente zurück. Ungültige Eingaben, z.B. nicht vorhandene Leitungs- und Ausgangsnummern am Expanderelement, oder ungültige Anweisungen werden mit einem Fehlerton oder einer Fehlertonfolge quittiert.

Analog wird bei der Steuerung mit Datenwörtern verfahren.

Eine zweiter Sonderbefehl, z.B. im MFV die "#"-Taste, dient dazu, die elektronische Schaltung in einen definierten Anfangszustand zu setzen. Das kann notwendig sein, um z.B. eine gesendete Ziffernfolge zurückzunehmen oder bei aufgetretenen Spannungsschwankungen, welche die Versorgungsspannung der Elektronik beeinträchtigt haben. Der Sonderbefehl wird vom Schaltungsresetmodul der elektronischen Schaltung erkannt und kann die Zentraleinheit in Abhängigkeit von der Stellung des Schaltelementes zurückzusetzen.

Beim Abbruch und/oder Aufbau der Verbindung vom Anrufer zur elektronischen Schaltung kann zunächst vom Eingangselement ein Reset-Signal, z.B. im MFV mit der "#"-Taste, an das Schaltungsresetelement gesendet werden, um die Zentraleinheit in einen definierten Zustand zu setzen. In einer vorteilhaften Weiterentwicklung der erfindungsgemäßen Vorrichtung erzeugt diese dieses Signal selbst beim Verbindungsauf- und/oder Abbau. Das Reset-Signal kann auch automatisch beim Verbindungsauf- und/oder Abbau durch zwischen die elektronische Schaltung und das Telefonnetz eingebrachte Elemente, z.B. ein NAD, erzeugt werden.

Die so ausgeführte Vorrichtung zum fernbedienten Zurücksetzen von Mikrocomputern kann direkt an eine bereits bestehende Telefonleitung ohne großen Aufwand angeschlossen werden. Der Anschluß an die Mikrocomputer, die zurückgesetzt werden sollen, gestaltet sich einfach und meist ohne Lötarbeiten, da moderne Mikrocomputer bereits über eine Steckverbindung mit Resetleitung an die CPU verfügen und das dem Mikrocomputer zugeordnete Resetelement über einen Zwischensockel ohne kostenaufwendige Manipulationen an der Hardware mit diesem verbunden werden kann.

Die Kosten für das Zurücksetzen eines oder mehrerer Mikrocomputer beschränkt sich gegenüber dem bisherigen Stand der Technik auf die Gebühren der Telefonverbindung. Der Zeitaufwand für das Zurücksetzen besonders auch innerhalb autonom arbeitender Anlagen fällt erheblich und erhöht somit die Verfügbarkeit und Rentabilität des gesamten Systems.

Nachfolgend wird die Erfindung anhand eines Auführungsbeispiels näher erläutert. Es zeigen die Figuren:
- Fig.1: Vorrichtung zum fernbedienten Zurücksetzen von Mikrocomputern mit angeschlossenen Mikrocomputern und Netzzugangsgerät.
- Fig.2: ein Flußdiagramm der Schaltungs- und Programmlogik der erfindungsgemäßen Vorrichtung nach Fig. 1

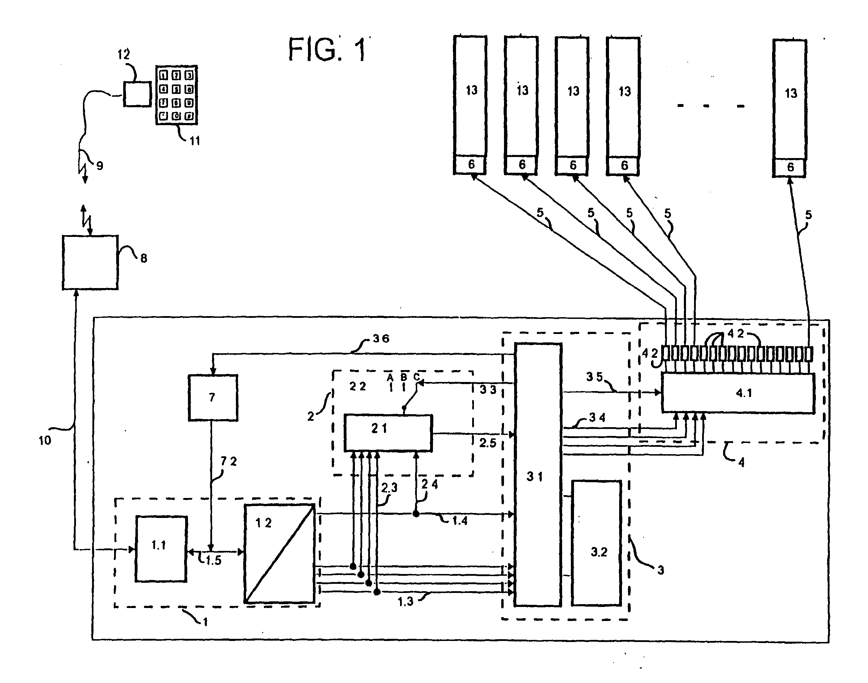

Fig. 1 zeigt eine Vorrichtung zum fernbedienten Zurücksetzen von Mikrocomputern, die aus einer Steuerkarte und einer Mehrzahl den Mikrocomputern zugeordneten Resetelementen 6 besteht und über eine Anschlußleitung 10 mit einem Telefonnetz 9 verbunden ist. Zwischen Steuerkarte und Telefonnetz 9 können noch weitere Elemente 8, z.B. ein Netzzugangsgerät (NAD), geschaltet sein, die den Zugang zu an diese Elemente angeschlossene Geräte, in diesem Fall die erfindungsgemäße Vorrichtung, über das Telefonnetz 9 kontrollieren oder andere Aufgaben erfüllen. Das Netzzugangsgerät 8 bekannter Bauart schützt angeschlossene Geräte vor ungewolltem oder unberechtigtem Zugriff durch eine Paßwort- oder Codenummerabfrage. Erst nach erfolgter, korrekter Identifikation eines Anrufers stellt das NAD 8 eine Verbindung zur Steuerkarte her.

Die Verbindung mit dem Anrufer kann auch direkt vom Eingangselement hergestellt werden. Der Schutz vor ungewolltem oder unberechtigtem Zugriff kann dann durch eine Paßwort- oder Codenummerabfrage in einer Zentraleinheit 3 oder im Eingangselement 1 der Steuerkarte vorgenommen werden, welche dazu NAD-Funktionen haben muß.

Die Steuersignale sind bei der dargestellten Ausführungsform der Erfindung mehrfrequenzcodierte Signale.

Das Eingangselement 1 besitzt ein Schutzelement 1.1, das einen Überspannungsschutz gewährleistet und die elektronische Schaltung galvanisch vom Telefonnetz 9 trennt. Es kann sich hierbei z.B. um einen Übertrager handeln, der im wesentlichen aus einer Primär- und einer Sekundärspule besteht. Das Schutzelement 1.1 ist über eine Signalleitung 1.5 mit einem Mehrfrequenzverfahren-Decoder 1.2 (MFV-Decoder) und über einen Abzweig 7.2 mit einem Tongenerator 7 verbunden. Die Signalleitung 1.5 leitet ankommende Signale an den MFV-Decoder 1.2 weiter und kann ausgehende Signale, wie z.B. einen von einem Tongenerator 7 erzeugten Ton oder eine Tonfolge als Quittungs- oder Fehleranzeige, an das Schutzelement 1.1 und von dort über die Anschlußleitung 10 und das Telefonnetz 9 an den Anrufer senden, der angeschlossene Rechenanlagen ferngesteuert zurücksetzen will.

Der MFV-Decoder 1.2 ermittelt aus dem über die Signalleitung 1.5 eingehenden Frequenzgemisch, ob ein MFV-Signal gesendet wurde, und wandelt dieses dann in einen Binärcode um. Solange ein gültiges MFV-Signal an der Signalleitung 1.5 anliegt, liegt auf einem Steuerausgang 1.4 des MFV-Decoders 1.2 ein Steuersignal an. Verstummt das Frequenzgemisch oder liegen ungültige Frequenzen am MFV-Decoder 1.2 an, so liegt kein Steuersignal am Steuerausgang des MFV-Decoders 1.2 an. Der MFV-Decoder 1.2 dient somit auch als Filter, der Fremdsignale, wie z.B. Sprache oder FAX-Signale unterdrückt.

Die Eingangsleitungen 1.3 übertragen den vom MFV-Decoder 1.2 erzeugten Binärcode zu einem Prozessor 3.1 einer Zentraleinheit 3. Die Steuerleitung 1.4 überträgt das Steuersignal zum Prozessor 3.1. Sämtliche Eingangsleitungen 1.3 sowie die Steuerleitung 1.4 besitzen je einen Abzweig 2.3 und 2.4 zu einem Logikbaustein 2.1 eines Schaltungsresetmodul 2.

Das Schaltungsresetmodul 2 dient dazu, die elektronische Schaltung bei Bedarf in einen definierten Anfangszustand zurücksetzen. Dieser Fall tritt ein, wenn die Versorgungsspannung der elektronischen Schaltung, z.B. nach Stromausfall oder Spannungsschwankungen nicht wieder korrekt aufgebaut wurde, oder wenn ein Anrufer eine bereits übermittelte Eingabe zurücknehmen will.

Damit der Logikbaustein 2.1 ein Rücksetzsignal zum Prozessor 3.1 über eine Rücksetzleitung 2.5 senden kann müssen bei der vorliegenden Ausgestaltung der Erfindung gleichzeitig drei Bedingungen erfüllt sein:
1. An den Abzweigen 2.3 vom MFV-Decoder 1.2 muß der Binärcode für das Zurücksetzen der elektronischen Schaltung anliegen.
2. Am Abzweig 2.4 der Steuerleitung 1.4 muß ein vom MFV-Decoder 1.2 gesendetes Steuersignal anliegen, d.h. daß die Anweisung zum zurücksetzen der elektronischen Schaltung zu diesem Zeitpunkt gesendet wird.
3. Ein Schaltelement 2.2, das am Schaltungsresetmodul 2 angeordnet ist, muß das Zurücksetzen der Vorrichtung zulassen.

Das Schaltelement 2.2 kann dazu definierte Stellungen, z.B. drei definierte Stellungen einnehmen. Eine Stellung A verhindert das Zurücksetzen immer, so daß die Vorrichtung generell nicht fernbedient zurückgesetzt werden kann. Eine Stellung B erlaubt das Zurücksetzen immer. Eine Stellung C ermöglicht es der Zentraleinheit 3 über eine Kontrolleitung 3.3 zum Schaltelement 2, programmgesteuert zu entscheiden, ob ein Zurücksetzten zugelassen oder verhindert wird. Die Zentraleinheit 3 kann ein Zurücksetzen z.B. verhindern, wenn mehrere oder sämtliche an die elektronische Schaltung angeschlossenen Mikrocomputer 13 zurückgesetzt werden sollen und dieser Vorgang nicht unterbrochen werden soll.

Vorteilhaft kann der Logikbaustein dazu aus einer Kombination einer Gatterlogik und von Transistoren bestehen. Die Gatterlogik sendet ein Signal, wenn an einem Eingang der Binärcode für ein zurücksetzen der Vorrichtung anliegt. Die Transistoren sind mit der Gatterlogik so verbunden, daß nur dann ein Rücksetzsignal über die Rücksetzleitung 2.5 an den Prozessor 3.1 gesendet wird, wenn alle drei Bedingungen gleichzeitig erfüllt sind. Diese Ausführung des Logikbausteins 2.1 hat den Vorteil, daß sie ebenso wie der MFV-Decoder 1.2 gegenüber Spannungsschwankungen unempfindlich ist und fehlerfrei arbeitet, solange eine Mindestspannung nicht unterschritten wird. Das ermöglicht ein sicheres Zurücksetzen der Vorrichtung, auch bei ungünstigen Spannungsverhältnissen.

Die Zentraleinheit 3 besteht aus dem Prozessor 3.1 und einer Speichereinheit 3.2 mit Programm. Die Speichereinheit 3.2 für das Programm ist vorzugsweise als nichtflüchtiger Speicher, z.B. als EPROM, ausgebildet und enthält ein zugeordnetes Programm zur Steuerung der elektronischen Schaltung. Der Prozessor 3.1 besitzt Eingänge zur Aufnahme von Daten, die mit den Eingangsleitungen 1.3 des MFV-Decoders 1.2 verbunden sind. Vorzugsweise kommen vier Eingangsleitungen 1.3 zum Einsatz. Mit vier Eingangsleitungen 1.3 können 16 MFV-Signale binär verschlüsselt werden.

Für den Betrieb der erfindungsgemäßen Vorrichtung sind mindestens 10 Ziffern, sowie weitere Zeichen, z.B. zwei Sonderzeichen, notwendig, die als MFV-Signal über das Telefonnetz 9 übertragbar sind.

Ein weiterer Eingang des Prozessors 3.1 ist mit der Steuerleitung 1.4 vom MFV-Decoder verbunden. Die Rücksetzleitung 2.5 vom Schaltungsresetmodul 2 mündet auf dem Reseteingang des Prozessors 3.1. Der Prozessor 3.1 besitzt Ausgangsleitungen 3.4, die mit einer Expandereinheit 4 verbunden sind. Die Anzahl der Ausgangsleitungen 3.4 hängt vom vorhandenen Prozessortyp ab und richtet sich nach der Anzahl von Mikrocomputern 13, die von der Vorrichtung zurückgesetzt werden sollen. Im vorliegenden Ausführungsbeispiel sind vier Ausgangsleitungen 3.4 dargestellt, die zusammen 16 Mikrocomputer 13 adressieren können. Die Ausgangsleitungen 3.4 sind um eine Pegelleitung 3.5 ergänzt, die ebenfalls vom Prozessor 3.1 zur Expandereinheit 4 führt. Die Kontrolleitung 3.3 verbindet den Prozessor 3.1 mit dem Schaltelement 2.2 des Schaltungsresetmoduls 2 und ermöglicht es dem Prozessor 3.1, bei entsprechender Stellung des Schaltelements 2.2 Einfluß auf das Zurücksetzen der Vorrichtung auszuüben.

Prozessor 3.1 und Speichereinheit 3.2 der Zentraleinheit 3 sind auf bekannte Weise mit einem Adress- und einem Datenbus miteinander verbunden. Der Prozessor 3.1 kann programmgesteuert über eine Zuleitung 3.6 zu einem Tongenerator 7 einen Ton oder eine Tonfolge erzeugen, die über die Signalleitung 1.5 und die Anschlußleitung 10 an das Telefonnetz 9 übertragen wird und z.B. als Quittungston oder Quittungstonfolge dienen kann. Die Zentraleinheit 3 hat die Aufgabe, die vom MFV-Decoder 1.2 binär verschlüsselten Signale zu übernehmen und die Ausgangsleitungen 3.4 gemäß den vom Programm vorgegebenen Anweisungen anzusteuern. Über die Adressleitungen 3.4 überträgt der Prozessor 3.1 die binär verschlüsselte Nummer desjenigen Mikrocomputers 13, der in einen definierten Zustand zurückgesetzt werden soll. Aus der Pegelleitung 3.5 wird die Dauer eines dafür nötigen Impulses, den die Expandereinheit 4 an den Mikrocomputer 13 sendet, übertragen.

Die Ausgangsleitungen 3.4 sowie die Pegelleitung 3.5 münden in der Expandereinheit in ein Expanderelement 4.1. Das Expanderelement 4.1, das vorteilhaft als integrierte Schaltung ausgeführt sein kann, expandiert die Ausgangsleitungen 3.4 auf eine Anzahl von Ausgängen. Die Zahl der Ausgänge entspricht dabei der Anzahl unterschiedlicher binärer Codes, die über die Ausgangsleitungen 3.4 übertragen werden können. Im vorliegenden Ausführungsbeispiel sind das 16 Ausgänge. Die Ausgänge das Expanderelements 4.1 können je nach vom Prozessor 3.1 übertragenen Code mit Spannung beaufschlagt werden. Dazu wird der auf der Pegelleitung 3.5 anliegende Pegel auf denjenigen Ausgang projiziert, dessen Nummer als Binärcode an den Ausgangsleitungen 3.4 anliegt. Ein Verstärkerelement 4.2 verstärkt die am betreffenden Ausgang anliegende Spannung, so daß ein an den Ausgang über eine flexible Leitung 5 angeschlossenes Resetelement 6, welches einen angeschlossenen Mikrocomputer 13 zurücksetzen kann, schalten kann.

Das Resetelement 6 ist über flexible Leitung und Steckverbindugen mit dem zugehörigen Ausgang am Verstärkerelement 4.2 des Expanderelements 4.1 verbunden und ist im Mikrocomputer 13 an dessen Resetleitung angeschlossen. Das Resetelement 6 besteht aus einem Schaltmittel, z.B. einem Relais, das bei Beaufschlagung mit Spannung vom Expanderelement 3.1 einen Kreislauf schalten kann um den Mikrocomputer zurückzusetzen. Herkömmliche Mikrocomputer 13 besitzen für das Zurücksetzen eine Leitung, die von einem Hauptprozessor zu einer Steckverbindung, z.B. auf einer Hauptplatine führt. Für die Herstellung einer Verbindung von Resetelement 6 und Resetleitung des Mikrocomputers kann zwischen Stecker und Steckverbindung ein Zwischensockel eingesetzt werden, der mit dem Resetelement 6 über eine Zuleitung verbunden ist.

Die Eingabe von Daten für das fernbediente Zurücksetzen eines oder mehrerer Mikrocomputer 13 über das Telefonnetz 9 erfolgt mit Hilfe eines MFV-fähigen Telefons 12 oder über einen an das Telefon 12 angeschlossenen MFV-Sender 11, bekannter Bauart. Der MFV-Sender muß zur Steuerung der elektronischen Schaltung mindestens 10 Ziffern, sowie weiter Zeichen als MFV-Signal senden können. Dazu wird zunächst von einem beliebigen Telefon 12 eine Verbindung zur elektronischen Schaltung über das Telefonnetz 9 aufgebaut. Der Verbindungsaufbau kann durch zwischen elektronischer Schaltung und Telefonnetz 9 geschaltete Elemente, z.B. ein Netzzugangsgerät (NAD) 8, oder durch das Eingangselement 1 vorgenommen werden. Der Verbindungsaufbau wird dem Anrufer mittels einen Quittungston oder eine Quittungstonfolge mitgeteilt. Der Quittungston kann vom Tongenerator 7 erzeugt werden. Es ist ebenfalls erfindungsgemäß, wenn der Quittungston oder die Quittungstonfolge z.B. vom NAD 8 gesendet wird.

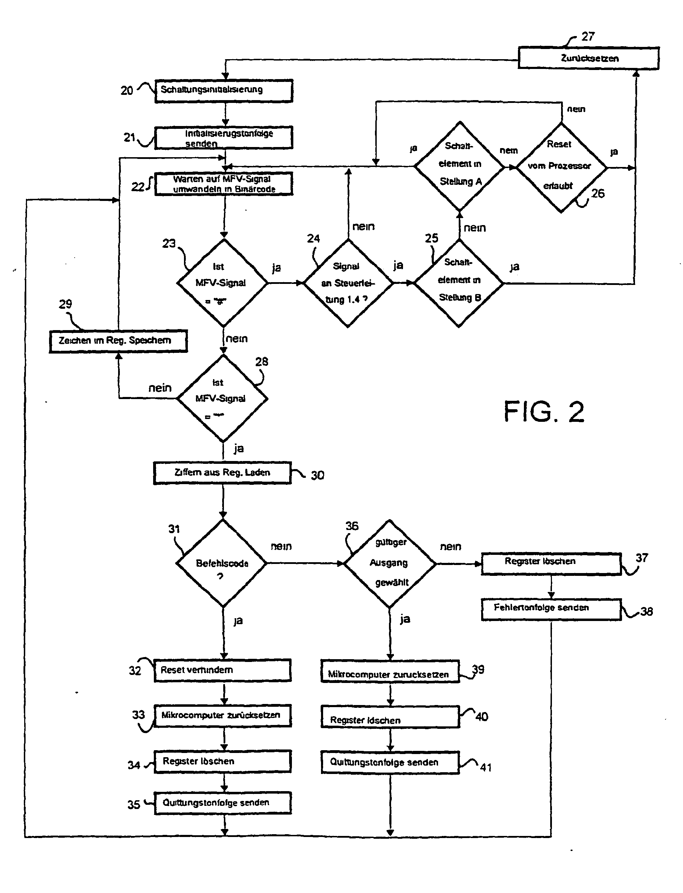

Fig.2 zeigt ein Flußdiagramm der Schaltungs- und Programmlogik der erfindungsgemäßen Vorrichtung. Die Schaltungs- und Programmlogik bearbeitet die von einem Anrufer über das Telefonnetz 9 übertragenen Ziffern und Zeichen und steuert die Vorrichtung nach Fig. 1.

Bei den eingehenden MFV-Signalen handelt es sich um definierte Frequenzpaare (Töne), die vom MFV-Decoder 1.2 erkannt und binär verschlüsselt an die Schaltungs- und Programmsoftware weitergeleitet werden. Nach dem Aufbau einer Verbindung über das Telefonnetz 9 initialisiert sich die Vorrichtung im Programmschritt 20 selbst. Dazu schaltet der Prozessor 3.1 den Tongenerator 7 über die Zuleitung 3.6 aus, setzt den Pegel der Pegelleitung 3.5 sowie die Ausgangsleitungen 3.4 auf Null, erlaubt das Zurücksetzen der Vorrichtung durch das Schaltungsresetmodul 2 über die Kontrolleitung 2.3 und löscht den Inhalt sämtlicher Register des Prozessors 3.1.

Dann wird im Programmschritt 21 eine Initialisierungstonfolge mit Hilfe des Tongenerators 7 gesendet. Die Vorrichtung ist dann zum Empfang von Anweisungen über das Telefonnetz 9 bereit. Im Programmschritt 22 werden ankommende Signale, sofern es sich um MFV-Signale handelt, vom MFV-Decoder 1.2 in Binärcode umgewandelt und weitergeleitet. Das Schaltungsresetmodul 2 überprüft im Schritt 23 über die Abzweige 2.3 der Eingangsleitungen 1.3, ob es sich bei dem empfangenen Signal um das Signal zum Zurücksetzen der Vorrichtung handelt, z.B. um das MFV-Signal für die "#" Taste. Ist das der Fall, so prüft der Logikbaustein 2.1 im Schritt 24, ob auch an der Steuerleitung 1.4, bzw. am Abzweig 2.4 das Steuersignal anliegt, d.h. daß ein Anrufer momentan z.B. die "#"-Taste betätigt. Ist das ebenfalls der Fall, so wird im Schritt 25 geprüft, ob die Stellung des Schaltelements 2.2 das Zurücksetzen der elektronischen Schaltung erlaubt.

Erlaubt die Stellung des Schaltelements 2.2 ein Zurücksetzen generell, z.B. Stellung A, so wird die Schaltung durch die mit dem Prozessor 3.1 verbundene Rücksetzleitung 2.5 zurückgesetzt. Verbindet die Stellung des Schaltelements 2.2 die Kontrolleitung 3.3. mit dem Logikbaustein 2.1, z.B. Stellung C, so wird im Schritt 26 geprüft, ob der Prozessor 3.1 ein Zurücksetzen programmgesteuert zuläßt. Ist das der Fall, so wird die Vorrichtung im Schritt 27 zurückgesetzt. Danach initialisiert sich die Vorrichtung im Schritt 20 auf beschriebene Weise.

In allen anderen Fällen, wenn an der Steuerleitung 2.4 kein Steuersignal anliegt und/oder die Stellung des Schaltelements 2.2 ein Zurücksetzen generell verhindert und/oder der Prozessor 3.1 ein Zurücksetzen programmgesteuert unterbindet, wird wieder im Programmschritt 22 auf ein eingehendes MFV-Signal gewartet.

Im Programmschritt 28 wird zunächst vom Prozessor programmgesteuert geprüft, ob das zweite Sonderzeichen, z.B. das "*"-Zeichen, gesendet wurde. Ist dies nicht der Fall, so wird das gesendete Zeichen bzw. die gesendete Ziffer im Programmschritt 29 in einem Register gespeichert. Wird im Programmschritt 28 der Binärcode für das "*"-Zeichen erkannt, so werden zunächst die bisher gespeicherten Ziffern im Programmschritt 30 aus den Registern geladen und dann im Schritt 31 geprüft, ob es sich bei der Ziffernfolge um einen Anweisungs-/Befehlscode handelt. Ein Anweisungscode kann eine Ziffernfolge sein, die nicht mit einer Ausgangsnummer der Expandereinheit 4 übereinstimmt, oder eine Folge von anderen Zeichen. Der Anweisungscode kann z.B. das Zurücksetzen von ausgewählten Mikrocomputern oder sämtlichen Mikrocomputern bewirken. Im Programmschritt 32 wird ein Zurücksetzen der Zentraleinheit 3 über die Kontrolleitung 2.3 verhindert. Diese Anweisung wird wirksam, wenn die Kontrolleitung 2.3 bei entsprechender Stellung des Schaltelements 2.2 mit dem Logikbaustein 2.1 verbunden ist.

Danach werden im Schritt 33 sukzessive die ausgewählten Mikrocomputer oder sämtliche Mikrocomputer 13, die über die Resetelemente 6 an den Ausgängen der Expandereinheit 4 angeschlossen sind, zurückgesetzt, indem die Nummern der Ausgänge nacheinander binär verschlüsselt über die Ausgangsleitungen 3.4 an die Expandereinheit 4 übertragen werden. Gleichzeitig wird die Pegelleitung 3.5 mit Spannung beaufschlagt.

Schritt 34 erlaubt das Zurücksetzten der elektronischen Schaltung durch das Schaltungsresetmodul 2 wieder. In Schritt 34 und 35 werden zunächst die Register gelöscht und anschließend über den Tongenerator 7 ein Quittungston oder eine Quittungstonfolge gesendet.

Wird im Schritt 31 kein Anweisungscode erkannt, so wird im Programmschritt 36 überprüft, ob die Ziffernfolge eine gültige Ausgangsnummer der Expandereinheit 4 mit zugehörigem Mikrocomputer 13 bezeichnet. Ist das der Fall, so wird im Schritt 39 der Binärcode für den Mikrocomputer 13 über die Ausgangsleitungen 3.4 an die Expandereinheit 4 übertragen, welche die dann auf der Pegelleitung 3.5 anliegende Spannung am entsprechenden Ausgang verstärkt und den Mikrocomputer 13 mit Hilfe des Resetelements 6 zurücksetzt. Im Schritt 40 und 41 werden sämtliche Register gelöscht und ein Quittungston bzw. eine Quittungstonfolge analog zu den Schritten 34 und 35 gesendet.

Wird im Schritt 36 keine gültige Ziffernfolge erkannt, so werden in den Schritten 37 und 38 zunächst sämtliche Register gelöscht und über den Tongenerator 7 ein Fehlerton bzw. eine Fehlertonfolge gesendet.
Danach werden im Schritt 22 wieder neue MFV-Signale erwartet.

Nach Abbruch der Verbindung über das Telefonnetz 9 kann sich die elektronische Schaltung zurücksetzen und analog zu Programmschritt 20 initialisieren.

Externe Geräte 8, die zwischen Schaltung und Telefonnetz 9 installiert sind, z.B. das NAD, können die Verbindung auch selbsttätig, nach Ablauf einer Zeitperiode ohne Signaleingang, abbrechen und dann automatisch ein MFV-Signal zum Zurücksetzen an die Vorrichtung senden.

## Patentansprüche

1. Vorrichtung zum fernbedienten Zurücksetzen von Rechenanlagen, insbesondere Mikrocomputern, **dadurch gekennzeichnet,**
**dass** dieselbe aus einer Steuerkarte und wenigstens einem Resetelement (6), welches jeweils einem Mikrocomputer (13) zugeordnet ist, besteht, wobei
a) die Steuerkarte an das Telefonnetz anschließbar ist, mit einem Eingangselement (1) über das Telefonnetz übermittelte Steuersignale empfängt und eine Zentraleinheit (3) die Steuersignale als binären Steuercode einer Expandereinheit (4) übermittelt, welche die dem Steuercode entsprechenden Resetelemente (6) ansteuert und schaltet, wodurch die zugeordneten Mikrocomputer (13) zurückgesetzt werden,
b) ein Schaltungsresetmodul (2) die Steuerkarte und damit die Resetelemente (6) in einen definierten Anfangszustand zurückzusetzen imstande ist, und
c) das Schaltungsresetmodul (2) wenigstens drei Betriebszustände einnehmen kann, wobei ein dem Schaltungsresetmodul (2) zugeordnetes Schaltelement (2.2) in einer Stellung A das Zurücksetzen der Steuerkarte immer verhindert, in einer zweiten Stellung B das Zurücksetzen immer erlaubt und in einer dritten Stellung C die Zentraleinheit (3) programmgesteuert ein Zurücksetzen der elektronischen Schaltung zuzulassen oder zu verhindern imstande ist.

2. Vorrichtung nach Anspruch 1, **dadurch gekennzeichnet,**
**daß** eine Netzzugangskontrolle mit Abfrage eines Zugangscodes vorgesehen ist, welche entweder innerhalb der Steuerkarte vom Eingangselement (1) oder von der Zentraleinheit (3) oder außerhalb der Steuerkarte von einem Vorschaltelement (8), welches zwischen Netzanschluß und Steuerkarte geschaltet ist, insbesondere von einem Netzzugangselement NAD, durchgeführt wird.

3. Vorrichtung nach Anspruch 1 oder 2, **dadurch gekennzeichnet,**
**daß** die Steuersignale mehrfrequenzcodierte (MFV-) Signale sind, welche innerhalb der Eingangseinheit (1) mit einem MFV-Decoder (1.2) in binäre Signale umwandelt und der Zentraleinheit übermittelt werden.

4. Vorrichtung nach Anspruch 3, **dadurch gekennzeichnet,**
**daß** der MFV-Decoder (1.2) über eine Steuerleitung (1.4) die Zentraleinheit freischaltet, falls am MFV-Decoder (1.2) ein gültiges MFV-Signal anliegt.

5. Vorrichtung nach Anspruch 2, **dadurch gekennzeichnet,**
**daß** die Steuerkarte eine RS232-Schnittstelle aufweist und über ein Modem als Vorschaltgerät (8), welches an die RS232-Schnittstelle angeschlossen ist, mit dem Telefonnetz verbunden ist.

6. Vorrichtung nach Anspruch 5, **dadurch gekennzeichnet,**
**daß** die Steuersignale Datenwörter sind.

7. Vorrichtung nach einem der vorherigen Ansprüche, **dadurch gekennzeichnet,**
**daß** das Schaltungsresetmodul (2) die Steuerkarte nach richtiger Zugangscodeeingabe in den definierten Anfangszustand zurücksetzt.

8. Vorrichtung nach Anspruch 1 oder 7, **dadurch gekennzeichnet,**
**daß** das Schaltungsresetmodul (2) beim Absinken der Versorgungsspannung unter den für den Betrieb der Steuerkarte notwendigen Wert, z.B. bei unvollständigem Spannungsaufbau nach einem Stromausfall oder bei Spannungsschwankungen, die Zentraleinheit (3) zum Zurücksetzen der Steuerkarte in einen definierten Anfangszustand veranlaßt.

9. Vorrichtung nach einem der Ansprüche 1, 7 oder 8, **dadurch gekennzeichnet,**
**daß** das Schaltungsresetmodul (2) bei Eingabe eines Resetsignals das von der Eingangseinheit (1) empfangen und dem Schaltungsresetmodul (2) über Leitungen (2.3) übermittelt wird, die Zentraleinheit (3) zum Zurücksetzen der Steuerkarte in einen definierten Anfangszustand veranlaßt.

10. Vorrichtung nach einem der Ansprüche 1, 7, 8 oder 9, **dadurch gekennzeichnet,**
**daß** das Schaltungsresetmodul (2) als Steuereinheit einen Logikbaustein (2.1) aus Gattern und Transistoren aufweist.

11. Vorrichtung nach einem der vorherigen Ansprüche, **dadurch gekennzeichnet,**
**daß** die Zentraleinheit (3) einzelne, als Steuersignal in Form von MFV-Signalen oder Datenwörtern verschlüsselte, Ausgänge (4.2) der Expandereinheit (4) mit anschließbarem Resetelement (6) und damit den zugehörigen Mikrocomputer (13) anzusprechen imstande ist.

12. Vorrichtung nach einem der vorherigen Ansprüche, **dadurch gekennzeichnet,**
**daß** mehrere oder sämtliche Ausgänge (4.2) der Expandereinheit (4) durch die Eingabe eines Steuersignals auswählbar und die den Ausgängen (4.2) zugehörigen Mikrocomputer (13) zurücksetzbar sind.

13. Vorrichtung nach einem der vorherigen Ansprüche, **dadurch gekennzeichnet,**
**daß** ein Tongenerator (7) oder die Zentraleinheit (3) nach erfolgreicher Ausführung einer Anweisung einen Quittungston oder eine Quittungstonfolge bzw. ein Quittungs-Datenwort oder bei von der Zentraleinheit (3) erkannten fehlerhaften Anweisungen einen Fehlerton oder eine Fehlertonfolge bzw. ein Fehler-Datenwort über das Telefonnetz (9) zu senden imstande ist.

14. Vorrichtung nach einem der vorherigen Ansprüche, **dadurch gekennzeichnet,**
**daß** die Zentraleinheit (3) einen Prozessor (3.1) und eine Speichereinheit (3.2), vorzugsweise einen nichtflüchtigen Speicher, z.B. ein EPROM, aufweist, das ein Programm zur Steuerung der Steuerkarte enthält.

15. Vorrichtung nach einem der vorherigen Ansprüche, **dadurch gekennzeichnet,**
**daß** je ein Resetelement (6) an die Resetleitung des zugeordneten Mikrocomputers (13) angeschlossen ist, wobei ein Mikrocomputer beim Anliegen eines Signals am jeweiligen Resetelement zurückgesetzt wird (Warmstart).

16. Vorrichtung nach einem der Ansprüche 1 bis 14, **dadurch gekennzeichnet,**
**daß** die Resetelemente (6) ein Starkstromrelais enthalten und die Stromversorgung des dem Resetelement (6) zugeordneten Mikrocomputers (13) durch Schalten des Relais beim Anliegen eines Signals am Resetelement unterbrochen bzw. wiederhergestellt wird (Kaltstart).

17. Vorrichtung nach Anspruch 15, **dadurch gekennzeichnet,**
**daß** das Starkstromrelais eines Resetelements (6) mittels eines im Resetelement integrierten RS-Flipflops geschaltet wird, wobei jeweils zwei Ausgangsleitungen der Expandereinheit (4) mit den Eingangsleitungen des RS-Flipflops verbunden sind, so daß der Mikrocomputer (13) durch Ansteuerung der Ausgangsleitungen gezielt an- und ausschaltbar ist.

## Claims

1. Device for remote-controlled resetting of computing systems, in particular microcomputers, **characterized in that** said device consists of a control card and at least one reset element (6), each reset element being associated with a microcomputer (13), wherein
a) the control card can be connected to the telephone network, with a receiving element (1) that receives control signals transmitted through the telephone network and a central unit (3) that transmits the control signals as binary control codes to an expander unit (4) that drives and switches the reset elements (6) corresponding to the control code, by which means the associated microcomputers (13) are reset,
b) a circuit reset module (2) that is capable of resetting the control card and thereby the reset elements (6) to a defined initial state, and
c) the circuit reset module (2) can assume at least three operating states, wherein a switching element (2.2) associated with this circuit reset module (2) always prevents resetting of the control card in a setting A, always permits the resetting in a second setting B, and in a third setting C is capable of permitting or preventing the resetting of the electronic circuit by the central unit (3) under program control.

2. Device according to claim 1, **characterized in that** a network access control with querying of an access code is provided, said access control being performed either within the control card by the input element (1) or by the central unit (3), or outside the control card by a primary switching element (8) that is connected between the network connection and the control card, in particular being performed by a network access element NAD.

3. Device according to claim 1 or 2, **characterized in that** the control signals are multifrequency-coded (DTMF) signals, which are converted into binary signals in the input unit (1) with a DTMF decoder (1.2) and are transmitted to the central unit.

4. Device according to claim 3, **characterized in that** the DTMF decoder (1.2) releases the central unit by means of a control line (1.4) in the event that a valid DTMF signal is present at the DTMF decoder (1.2).

5. Device according to claim 2, **characterized in that** the control card has an RS232 interface and is connected to the telephone network through a modem as a primary switching element (8), said modem being connected to the RS232 interface.

6. Device according to claim 5, **characterized in that** the control signals are data words.

7. Device according to any one of the preceding claims, **characterized in that** the circuit reset module (2) resets the control card to the defined initial state upon correct access code entry.

8. Device according to claim 1 or claim 7, **characterized in that** the circuit reset module (2) causes the central unit (3) to reset the control card to a defined initial state when the supply voltage drops below the value necessary for operation of the control card, e.g. in the event of partial establishment of voltage after a power outage or in the event of voltage fluctuations.

9. Device according to any one of claims 1, 7 or 8, **characterized in that** the circuit reset module (2) causes the central unit (3) to reset the control card to a defined initial state upon entry of a reset signal that is received by the receiving unit (1) and transmitted to the circuit reset module (2) through lines (2.3).

10. Device according to any one of claims 1, 7, 8, or 9, **characterized in that** the circuit reset module (2) has a logic unit (2.1) consisting of gates and transistors as the control unit.

11. Device according to any one of the preceding claims, **characterized in that** the central unit (3) is capable of addressing individual outputs (4.2) of the expander unit (4) with connectable reset elements (6), and thereby the associated microcomputers (13), encoded as control signals in the form of DTMF signals or data words.

12. Device according to any one of the preceding claims, **characterized in that** several or all outputs (4.2) of the expander unit (4) can be selected by the entry of a control signal and the microcomputers (13) associated with the outputs (4.2) can be reset.

13. Device according to any one of the preceding claims, **characterized in that** a tone generator (7) or the central unit (3) is capable of transmitting through the telephone network (9) an acknowledgement tone or an acknowledgement tone sequence or an acknowledgement data word after successful execution of an instruction, or transmitting an error tone or an error tone sequence or an error data word in the event of erroneous instructions detected by the central unit (3).

14. Device according to any one of the preceding claims, **characterized in that** the central unit (3) has a processor (3.1) and a memory unit (3.2), preferably a nonvolatile memory, e.g. an EPROM, that contains a program for controlling the control card.

15. Device according to any one of the preceding claims, **characterized in that** one reset element (6) each is connected to the reset line of the associated microcomputer (13), wherein a microcomputer is reset (warm start) when a signal is present at the respective reset element.

16. Device according to any one claims 1 through 14, **characterized in that** the reset elements (6) contain a power relay, and the power supply for the microcomputer (13) associated with the reset element (6) can be interrupted or reestablished (cold start) by switching the relay when a signal is present at the reset element.

17. Device according to claim 15, **characterized in that** the power relay of a reset element (6) is switched by means of an RS flip-flop integrated in the reset element, wherein two output lines each of the expander unit (4) are connected to the input lines of the RS flip-flop, so that the microcomputer (13) can be turned on and off in a controlled manner by driving the output lines.

## Revendications

1. Dispositif de remise à zéro à distance d'ordinateurs, notamment de micro-ordinateurs, **caractérisé en ce qu'**il est composé d'une carte de commande et d'au moins un élément de remise à zéro (6), respectivement associé à un micro-ordinateur (13),
a) la carte de commande pouvant être raccordée au réseau téléphonique et recevant, à l'aide d'un élément d'entrée (1), des signaux de commande transmis par l'intermédiaire du réseau téléphonique, et une unité centrale (3) transmettant les signaux de commande sous la forme d'un code de commande binaire à une unité d'expansion (4) qui commande et commute les éléments de remise à zéro correspondant au code de commande, remettant ainsi les micro-ordinateurs (13) associés à zéro,
b) un module de remise à zéro de circuit (2) capable de remettre la carte de commande et, par conséquent, les éléments de remise à zéro (6) dans un état initial défini et
c) le module de remise à zéro de circuit (2) pouvant prendre au moins trois états de fonctionnement, un élément de commutation (2.2) associé au module de remise à zéro de circuit (2) empêchant toujours la remise à zéro de la carte de commande dans une position A et autorisant toujours la remise à zéro dans une deuxième position B et l'unité centrale (3) étant capable, dans une troisième position C, d'autoriser ou d'empêcher une remise à zéro du circuit électronique sous la commande d'un programme.

2. Dispositif selon la revendication 1, **caractérisé en ce qu'**un contrôle d'accès au réseau avec interrogation d'un code d'accès est prévu pour être exécuté soit à l'intérieur de la carte de commande par l'élément d'entrée (1) ou par l'unité centrale (3), soit à l'extérieur de la carte de commande par un élément en amont (8) intercalé entre la prise de secteur et la carte de commande, notamment par un dispositif d'accès au réseau (NAD).

3. Dispositif selon la revendication 1 ou 2, **caractérisé en ce que** les signaux de commande sont des signaux à sélection multifréquence par fréquences vocales (DTMF) qui, à l'intérieur de l'unité d'entrée (1), sont transformés en signaux binaires à l'aide d'un décodeur DTMF (1.2) avant d'être transmis à l'unité centrale.

4. Dispositif selon la revendication 3, **caractérisé en ce que** le décodeur DTMF (1.2) déconnecte l'unité centrale par l'intermédiaire d'une ligne de commande (1.4) si un signal DTMF valide est présent au décodeur DTMF (1.2).

5. Dispositif selon la revendication 2, **caractérisé en ce que** la carte de commande comporte une interface RS232 et elle est reliée au réseau téléphonique par l'intermédiaire d'un modem faisant fonction d'appareil en amont (8) raccordé à l'interface RS232.

6. Dispositif selon la revendication 5, **caractérisé en ce que** les signaux de commande sont des mots de données.

7. Dispositif selon l'une des revendications précédentes, **caractérisé en ce que**, après l'entrée d'un code d'accès correct, le module de remise à zéro de circuit (2) remet la carte de commande dans l'état initial défini.

8. Dispositif selon la revendication 1 ou 7, **caractérisé en ce que** le module de remise à zéro de circuit (2) amène l'unité centrale (3) à remettre la carte de commande dans un état initial défini lorsque la tension d'alimentation descend au-dessous de la valeur nécessaire au fonctionnement de la carte de commande, par exemple en cas de rétablissement incomplet de la tension après une coupure de courant ou en cas de variations de tension.

9. Dispositif selon l'une des revendications 1, 7 ou 8, **caractérisé en ce que** le module de remise à zéro de circuit (2) amène l'unité centrale (3) à remettre la carte de commande dans un état initial défini lorsqu'un signal de remise à zéro reçu par l'unité d'entrée (1) et transmis au module de remise à zéro de circuit (2) par l'intermédiaire de lignes (2. 3) est entré.

10. Dispositif selon l'une des revendications 1, 7, 8 ou 9, **caractérisé en ce que** le module de remise à zéro de circuit (2) comporte, comme unité de commande, un composant logique (2.1) constitué de portes et de transistors.

11. Dispositif selon l'une des revendications précédentes, **caractérisé en ce que** l'unité centrale (3) est capable d'adresser des sorties (4.2) individuelles, au moyen d'un signal de commande codé sous la forme de signaux DTMF ou de mots de données, de l'unité d'expansion (4) avec l'élément de remise à zéro (6) raccordable et, par conséquent, le micro-ordinateur (13) associé.

12. Dispositif selon l'une des revendications précédentes, **caractérisé en ce que** plusieurs ou toutes les sorties (4.2) de l'unité d'expansion (4) peuvent être sélectionnées par l'entrée d'un signal de commande et les micro-ordinateurs (13) associés aux sorties (4.2) peuvent être remis à zéro.

13. Dispositif selon l'une des revendications précédentes, **caractérisé en ce qu'**un générateur de son (7) ou l'unité centrale (3) est capable d'émettre, par l'intermédiaire du réseau téléphonique (9), un bip d'acquittement, une séquence de bips d'acquittement ou bien un mot de données d'acquittement après l'exécution réussie d'une instruction ou un bip d'erreur, une séquence de bips d'erreur ou un mot de données d'erreur en cas d'instructions erronées reconnues par l'unité centrale (3).

14. Dispositif selon l'une des revendications précédentes, **caractérisé en ce que** l'unité centrale (3) comporte un processeur (3.1) et une unité de mémoire (3.2), de préférence une mémoire non volatile, telle qu'une EPROM, contenant un programme pour la commande de la carte de commande.

15. Dispositif selon l'une des revendications précédentes, **caractérisé en ce qu'**un élément de remise à zéro (6) est respectivement raccordé à la ligne de remise à zéro du micro-ordinateur (13) associé, un micro-ordinateur étant remis à zéro en présence d'un signal à l'élément de remise à zéro respectif (démarrage à chaud).

16. Dispositif selon l'une des revendications 1 à 14, **caractérisé en ce que** les éléments de remise à zéro (6) contiennent un relais de courant haute tension et l'alimentation en courant du micro-ordinateur (13) associé à l'élément de remise à zéro (6) est interrompue ou rétablie par commutation du relais en présence d'un signal à l'élément de remise à zéro (démarrage à froid).

17. Dispositif selon la revendication 15, **caractérisé en ce que** le relais de courant haute tension d'un élément de remise à zéro (6) est commuté au moyen d'une bascule bistable RS intégrée à l'élément de remise à zéro, deux lignes de sortie de l'unité d'expansion (4) étant respectivement reliées aux lignes d'entrée de la bascule bistable RS de manière à permettre le démarrage et l'arrêt ciblés du micro-ordinateur (13) par la commande des lignes de sortie.
